# EUROPEAN PATENT APPLICATION

(11) **EP 1 013 702 A2**
(43) Date of publication of application: **28.06.2000**
(21) Application number: 99123669.6
(22) Date of filing: 29.11.1999
(51) Int. Cl.: C08J 5/18, C08L 83/10, C08F 299/08

(54) **Gas-permeable film**

(30) Priority: 21.12.1998 JP 36320898; 14.01.1999 JP 834099
(71) Applicant: Dow Corning Toray Silicone Company, Ltd., Tokyo 100-0005 (JP)
(72) Inventor: Morita, Yoshitsugu, Dow Corning Toray Sil.Co.,Ltd., Ichibara-shi, Chiba Prefecture (JP); Furukawa, Haruhiko, Dow Corning Toray Sil.Co.,Ltd., Ichibara-shi, Chiba Prefecture (JP); Aso, Takayuki, Dow Corning Toray Sil.Co., Ltd., Ichibara-shi, Chiba Prefecture (JP)
(74) Representative: Sama, Daniele, Dr.

(57) **Abstract**

A gas-permeable film contains a vinyl-type polymer that contains a pendant carbosiloxane dendrimer structure and a thermoplastic resin. The gas-permeable film has an excellent gas permeability as represented by its oxygen permeability and is also water repellent, moldable, heat resistant, and durable. It will, therefore, be useful in those applications where such characteristics are critical, for example, as a film for medical and hygiene applications, e.g., as a base film for feminine hygiene products and diapers, compresses, and adhesive plasters and adhesive bandages; and as a packaging material for oxygen absorbents, odor absorbents, perfumes and fragrances, reagents, and oxygen-reacting warming agents.

## Description

### FIELD OF THE INVENTION

This invention relates to a gas-permeable film. More particularly, this invention relates to a gas-permeable film that has an excellent gas permeability as represented by its oxygen permeability and that is also water repellent, moldable, heat resistant, and durable.

### BACKGROUND OF THE INVENTION

Organic resin films are widely used as packaging materials for foods, personal care products, and sundries; as covering and thermal insulating materials in the agricultural industry; as printing substrates; as covering materials in civil engineering and construction; and as supporting substrates for medical products. Among these, the application of organic resin films to food products, medical products, and hygiene products in particular can require an excellent gas permeability in addition to such properties as high strength, water repellency, flexibility, light weight, chemical resistance, moisture retention, waterproofness, and cold resistance.

Generally, however, some applications have been denied to these films due to their unsatisfactory gas permeability. In response to this, Japanese Laid Open (Kokai or Unexamined) Patent Application Number Hei 8-41216 (41,216/1996) teaches a method for imparting oxygen permeability to organic resin films by the addition of inorganic powder or organic powder to the organic resin constituent of the organic resin film and then drawing to generate voids and penetrating channels.

This method suffers from the drawbacks of reducing the mechanical strength of the film and raising the production costs. Thus, the appearance has been desired of a gas-permeable film that evidences an excellent gas permeability while also being satisfactory from a strength standpoint.

The object of this invention is to provide a gas-permeable film that has an excellent gas permeability as represented by its oxygen permeability and that is also water repellent, moldable, heat resistant, and durable.

### SUMMARY OF THE INVENTION

The gas-permeable film contains as its base component a vinyl-type polymer that contains a pendant carbosiloxane dendrimer structure (hereafter abbreviated as pendant carbosiloxane dendrimer-functional vinyl-type polymer).

The gas-permeable film of this invention, because it contains a pendant carbosiloxane dendrimer-functional vinyl-type polymer as base component, is characterized by the manifestation of water repellency, moldability, heat resistance, and durability in addition to its development of an excellent gas permeability as represented by its oxygen permeability.

### DETAILED DESCRIPTION OF THE INVENTION

The vinyl-type polymer used in this invention is a vinyl-type polymer that contains a carbosiloxane dendrimer structure in a pendant or side chain position. This carbosiloxane dendrimer structure refers to a high-molecular-weight group with a predictable and highly branched structure that elaborates radially from a single core. An example of a carbosiloxane dendrimer having such a structure is the highly branched siloxane-silalkylene copolymer taught in Japanese Patent Application Number Hei 9-171154(1997).

The carbosiloxane dendrimer structure present in the vinyl-type polymer in the gas-permeable film of this invention preferably is a group with the following general formula.

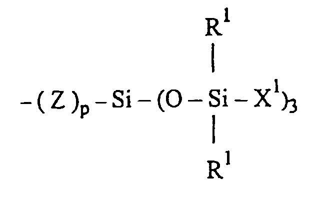

Z is a divalent organic group, for example, an alkylene group, arylene group, aralkylene group, ester-containing divalent organic group, ether-containing divalent organic group, ketone-containing divalent organic group, or amide-containing divalent organic group, among which organic groups with the following structures are preferred.

―C(=O)―O―R⁹―

―C(=O)―NH―R⁹―

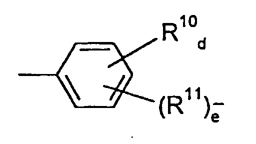

R⁹ represents C₁ to C₁₀ alkylene, for example, methylene, ethylene, propylene, and butylene with methylene and propylene being preferred. R¹⁰ represents C₁ to C₁₀ alkyl, for example, methyl, ethyl, propyl, and butyl with methyl being preferred. R¹¹ represents C₁ to C₁₀ alkylene, for example, methylene, ethylene, propylene, and butylene with ethylene being preferred. The subscript **d** is an integer from 0 to 4, and the subscript **e** is 0 or 1. R¹ is C₁ to C₁₀ alkyl or aryl.

The alkyl encompassed by R¹ is exemplified by methyl, ethyl, propyl, butyl, pentyl, isopropyl, isobutyl, cyclopentyl, and cyclohexyl. The aryl encompassed by R¹ is exemplified by phenyl and naphthyl. Methyl and phenyl are preferred for R¹, and methyl is particularly preferred. X¹ is the silylalkyl group with the following formula at **i** = 1.

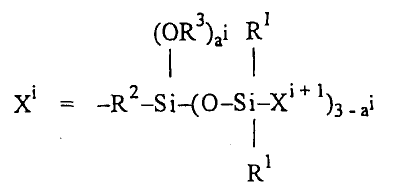

R¹ is defined as above. R² represents C₂ to C₁₀ alkylene and is exemplified by straight-chain alkylene such as ethylene, propylene, butylene, and hexylene, and by branched alkylene such as methylmethylene, methylethylene, 1-methylpentylene, and 1,4-dimethylbutylene. Ethylene, methylethylene, hexylene, 1-methylpentylene, and 1,4-dimethylbutylene are preferred for R². R³ is C₁ to C₁₀ alkyl and is exemplified by methyl, ethyl, propyl, butyl, and isopropyl. **i** is an integer with a value from 1 to 10 that specifies the generation of said silylalkyl group, and **a**ⁱ is an integer from 0 to 3, Xⁱ⁺¹ is selected from the set consisting of the hydrogen atom, C₁ to C₁₀ alkyl, aryl, and the above-defined silylalkyl group.

Preferred for use in the gas-permeable film of this invention is a carbosiloxane dendrimer-functional vinyl-type polymer afforded by the polymerization of
(A) 0 to 99.9 weight parts vinyl monomer
   and
(B) 100 to 0.1 weight parts carbosiloxane dendrimer that contains a radically polymerizable organic group and has the following general formula

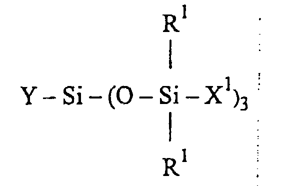

Y is a radically polymerizable organic group. R¹ is C₁ to C₁₀ alkyl or aryl. The alkyl encompassed by R¹ is exemplified by methyl, ethyl, propyl, butyl, pentyl, isopropyl, isobutyl, cyclopentyl, and cyclohexyl. The aryl encompassed by R¹ is exemplified by phenyl and naphthyl. Methyl and phenyl are preferred for R¹, and methyl is particularly preferred. X¹ is the silylalkyl group with the following formula at **i** = 1.

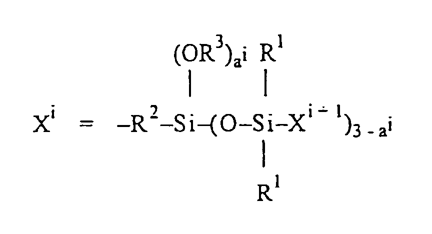

R¹ is defined as above; R² is C₂ to C₁₀ alkylene; R³ is C₁ to C₁₀ alkyl, for example, methyl, ethyl, propyl, and butyl; Xⁱ⁺¹ is selected from the set consisting of the hydrogen atom, C₁ to C₁₀ alkyl, aryl, and the above-defined silylalkyl group; **i** is an integer with a value from 1 to 10 that specifies the generation of said silylalkyl group; and **a**ⁱ is an integer from 0 to 3.

Considering this vinyl-type polymer in greater detail, the vinyl monomer (A) should contain a radically polymerizable vinyl group, but the type and other properties of this monomer are not otherwise critical. This vinyl monomer (A) is exemplified by lower alkyl (meth)acrylates such as methyl (meth)acrylate, ethyl (meth)acrylate, n-propyl (meth)acrylate, and isopropyl (meth)acrylate; higher alkyl (meth)acrylates such as n-butyl (meth)acrylate, isobutyl (meth)acrylate, tert-butyl (meth)acrylate, n-hexyl (meth)acrylate, cyclohexyl (meth)acrylate, 2-ethylhexyl (meth)acrylate, octyl (meth)acrylate, lauryl (meth)acrylate, and stearyl (meth)acrylate; the vinyl esters of lower aliphatic acids, such as vinyl acetate and vinyl propionate; the vinyl esters of higher aliphatic acids, such as vinyl butyrate, vinyl caproate, vinyl 2-ethylhexanoate, vinyl laurate, and vinyl stearate; aromatic vinyl monomers such as styrene, vinyltoluene, benzyl (meth)acrylate, phenoxyethyl (meth)acrylate, and vinylpyrrolidone; amide-functional vinyl monomers such as (meth)acrylamide, N-methylol(meth)acrylamide, N-methoxymethyl(meth)acrylamide, isobutoxymethoxy(meth)acrylamide, and N,N-dimethyl(meth)acrylamide; hydroxyl-functional vinyl monomers such as 2-hydroxyethyl (meth)acrylate, 2-hydroxybutyl (meth)acrylate, and 2-hydroxypropyl (meth)acrylate; fluorinated vinyl monomers such as trifluoropropyl (meth)acrylate, perfluorobutylethyl (meth)acrylate, and perfluorooctylethyl (meth)acrylate; epoxy-functional vinyl monomers such as glycidyl (meth)acrylate and 3,4-epoxycyclohexylmethyl (meth)acrylate; carboxyl-functional vinyl monomers such as (meth)acrylic acid, itaconic acid, crotonic acid, fumaric acid, and maleic acid; ether linkage-containing vinyl monomers such as tetrahydrofurfuryl (meth)acrylate, butoxyethyl (meth)acrylate, ethoxydiethylene glycol (meth)acrylate, polyethylene glycol (meth)acrylate, polypropylene glycol mono(meth)acrylate, hydroxybutyl vinyl ether, cetyl vinyl ether, and 2-ethylhexyl vinyl ether; unsaturated group-functionalized silicone compounds such as (meth)acryloxypropyltrimethoxysilane, polydimethylsiloxane (branched or straight-chain) bearing a (meth)acryl group at a single terminal, and polydimethylsiloxane bearing a styryl group at a single terminal; butadiene; vinyl chloride; vinylidene chloride; (meth)acrylonitrile; dibutyl fumarate; maleic anhydride; dodecylsuccinic anhydride; (meth)acryl glycidyl ether; the alkali metal salts, ammonium salts, and organic amine salts of radically polymerizable unsaturated carboxylic acids such as (meth)acrylic acid, itaconic acid, crotonic acid, fumaric acid, and maleic acid; radically polymerizable unsaturated monomers that contain a sulfonic acid residue, e.g., styrenesulfonic acid, as well as their alkali metal salts, ammonium salts, and organic amine salts; quaternary ammonium salts that are derived from (meth)acrylic acid, such as 2-hydroxy-3-methacryloxypropyltrimethylammonium chloride; and the methacrylate esters of alcohols that contain a tertiary amine group, such as the diethylamine ester of methacrylic acid, as well as the quaternary ammonium salts thereof. Component (A) is preferably a (meth)acrylate, for which specific examples are alkyl (meth)acrylates such as methyl (meth)acrylate, ethyl (meth)acrylate, n-butyl (meth)acrylate, and 2-ethylhexyl (meth)acrylate; hydroxyalkyl (meth)acrylates such as 2-hydroxyethyl (meth)acrylate, 2-hydroxypropyl (meth)acrylate, and 2-hydroxybutyl (meth)acrylate; fluoroalkyl (meth)acrylates such as trifluoropropyl (meth)acrylate, perfluorobutylethyl (meth)acrylate, and perfluorooctylethyl (meth)acrylate; and epoxy-functional (meth)acrylates such as glycidyl (meth)acrylate and 3,4-epoxycyclohexylmethyl (meth)acrylate.

Also usable are multifunctional vinyl monomers, exemplified by (meth)acryloyl-functional monomers such as trimethylolpropane tri(meth)acrylate, pentaerythritol tri(meth)acrylate, ethylene glycol di(meth)acrylate, tetraethylene glycol di(meth)acrylate, polyethylene glycol di(meth)acrylate, 1,4-butanediol di(meth)acrylate, 1,6-hexanediol di(meth)acrylate, neopentyl glycol di(meth)acrylate, trimethylolpropane trioxyethyl(meth)acrylate, tris(2-hydroxyethyl)isocyanurate di(meth)acrylate, tris(2-hydroxyethyl)isocyanurate tri(meth)acrylate, the di(meth)acrylates of diols that are the adducts of ethylene oxide or propylene oxide on bisphenol A, the di(meth)acrylates of diols that are the adducts of ethylene oxide or propylene oxide on hydrogenated bisphenol A, and triethylene glycol divinyl ether; and also by unsaturated group-functional silicone compounds such as polydimethylsiloxane endblocked at both terminals by the styryl group and polydimethylsiloxane endblocked at both terminals by the methacryloxypropyl group.

The additional use for component (A) of a silicone compound containing both a radically polymerizable unsaturated group and a hydrolyzable group can improve the durability of the water repellency of the resulting polymer. This radically polymerizable unsaturated group is exemplified by (meth)acryloxy-functional organic groups, (meth)acrylamide-functional organic groups, styryl-functional organic groups, C₂ to C₁₀ alkenyl, vinyloxy, and allyloxy. The hydrolyzable group is exemplified by halogen, alkoxy, and acetoxy. This type of component (A) is exemplified by organosilanes such as methacryloxypropyltrimethoxysilane, methacryloxypropylmethyldimethoxysilane, methacryloxypropyldimethylmethoxysilane, acryloxypropyltrimethoxysilane, acryloxypropylmethyldimethoxysilane, acryloxypropyldimethylmethoxysilane, vinyltrimethoxysilane, vinyltriethoxysilane, and vinylbutyldibutoxysilane.

The carbosiloxane dendrimer (B) has the following general formula.

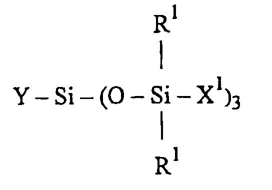

Y is a radically polymerizable organic group. Generally this will be an organic group capable of undergoing radical-mediated addition, while more specifically this group is exemplified by C₂ to C₁₀ alkenyl and by the (meth)acryloxy-functional organic groups, (meth)acrylamide-functional organic groups, and styryl-functional organic groups with the following general formulas.

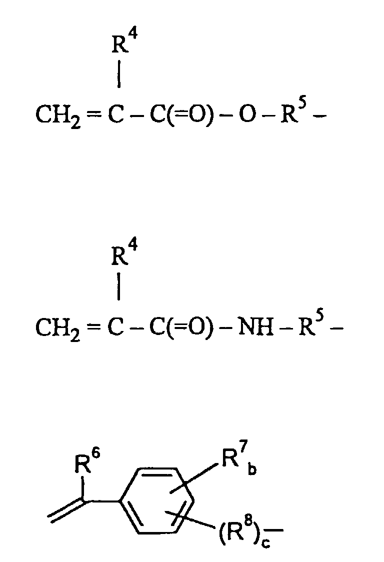

R⁴ and R⁶ are hydrogen or methyl; R⁵ and R⁸ are C₁ to C₁₀ alkylene; R⁷ is C₁ to C₁₀ alkyl; **b** is an integer from 0 to 4; and **c** is 0 or 1. These radically polymerizable organic groups are exemplified by acryloxymethyl, 3-acryloxypropyl, methacryloxymethyl, 3-methacryloxypropyl, 4-vinylphenyl, 3-vinylphenyl, 4-(2-propenyl)phenyl, 3-(2-propenyl)phenyl, 2-(4-vinylphenyl)ethyl, 2-(3-vinylphenyl)ethyl, vinyl, allyl, methallyl, and 5-hexenyl.

R¹ is C₁ to C₁₀ alkyl or aryl. The alkyl encompassed by R¹ is exemplified by methyl, ethyl, propyl, butyl, pentyl, isopropyl, isobutyl, cyclopentyl, and cyclohexyl. The aryl encompassed by R¹ is exemplified by phenyl and naphthyl. Methyl and phenyl are preferred for R¹, and methyl is particularly preferred.

X¹ is the silylalkyl group with the following formula at **i** = 1.

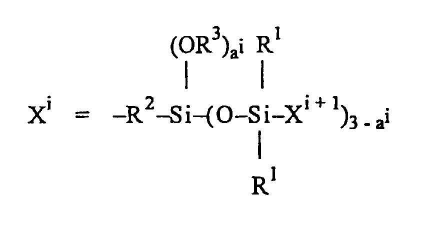

R¹ is defined as above. R² represents C₂ to C₁₀ alkylene and is exemplified by straight-chain alkylene such as ethylene, propylene, butylene, and hexylene, and by branched alkylene such as methylmethylene, methylethylene, 1-methylpentylene, and 1,4-dimethylbutylene. Ethylene, methylethylene, hexylene, 1-methylpentylene, and 1,4-dimethylbutylene are preferred for R². R³ is C₁ to C₁₀ alkyl, for example, methyl, ethyl, propyl, butyl, or isopropyl. Xⁱ⁺¹ is selected from the set consisting of the hydrogen atom, C₁ to C₁₀ alkyl, aryl, and the above-defined silylalkyl group. **a**ⁱ is an integer from 0 to 3. **i** is an integer with a value from 1 to 10 that specifies the generation of said silylalkyl group, i.e., that indicates the number of repetitions of this silylalkyl group.

The carbosioxane dendrimer (B) has the following general formula when the number of generations is 1: 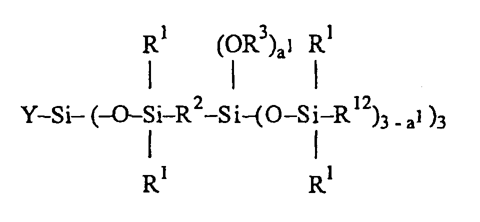 wherein Y, R¹, R², and R³ are defined as above; R¹² is the hydrogen atom or is defined as for R¹; **a**¹ is defined as for **a**ⁱ; and the average of the sum of the **a**¹ values in each molecule is from 0 to 7.

The carbosiloxane dendrimer (B) has the following general formula when the number of generations is 2: 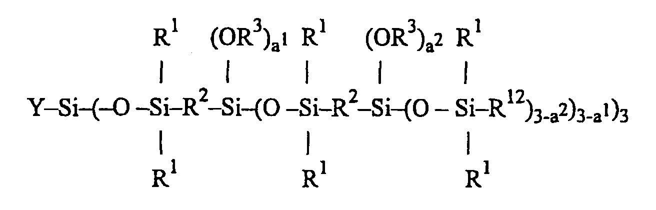 wherein Y, R¹, R², R³, and R¹² are defined as above; **a**¹ and **a**² are defined as for **a**ⁱ; and the average of the sum of the **a**¹ and **a**² values in each molecule is from 0 to 25.

The carbosiloxane dendrimer (B) has the following general formula when the number of generations is 3: 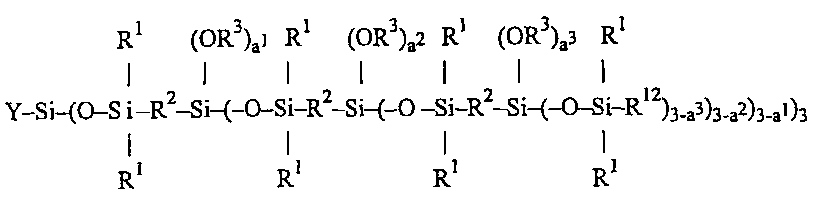 wherein Y, R¹, R², R³, and R¹² are defined as above; **a**¹, **a**² and **a**³ are defined as for **a**ⁱ; and the average of the sum of the **a**¹, **a**², and **a**³ values in each molecule is from 0 to 79.

Carbosiloxane dendrimers with the following average compositional formulas are examples of component (B), i.e., carbosiloxane dendrimer functionalized with a radically polymerizable organic group.

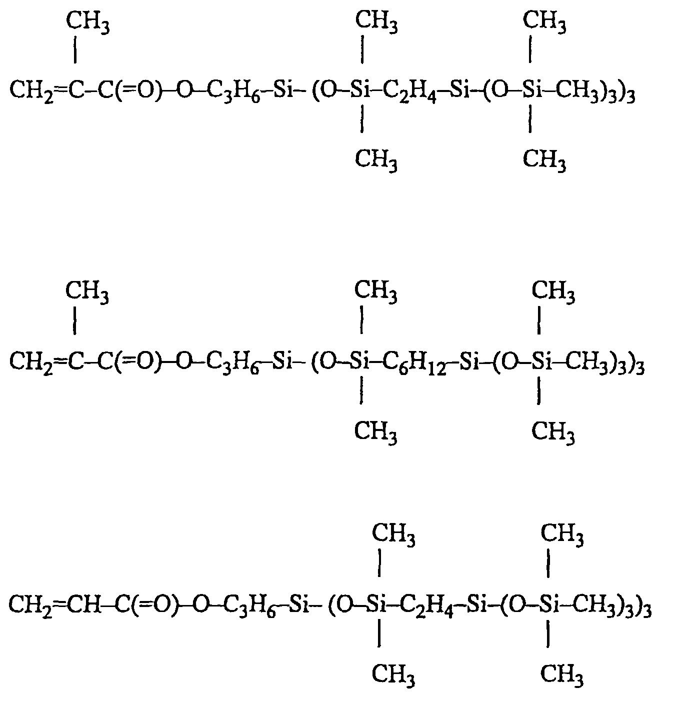

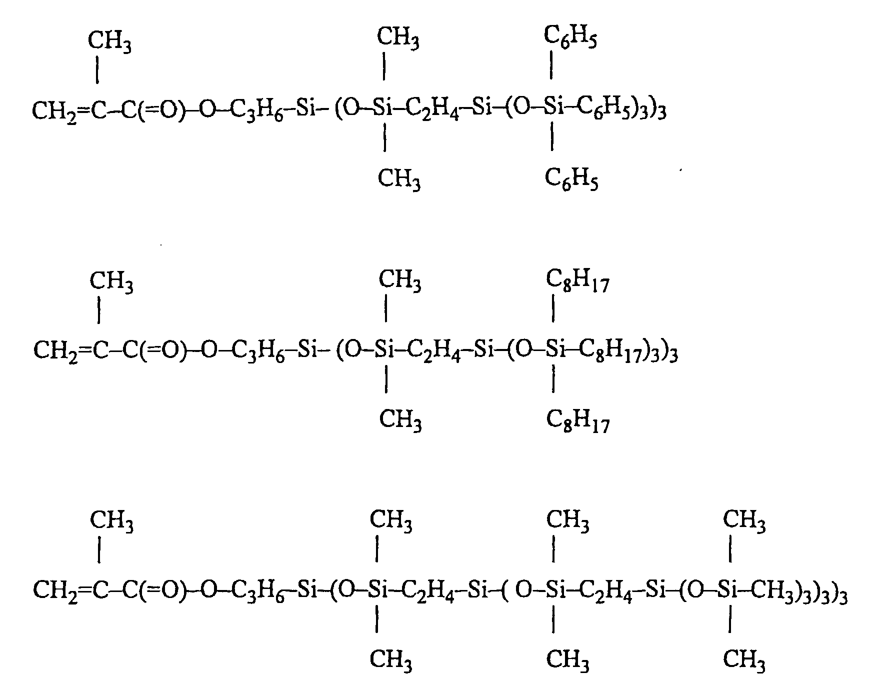

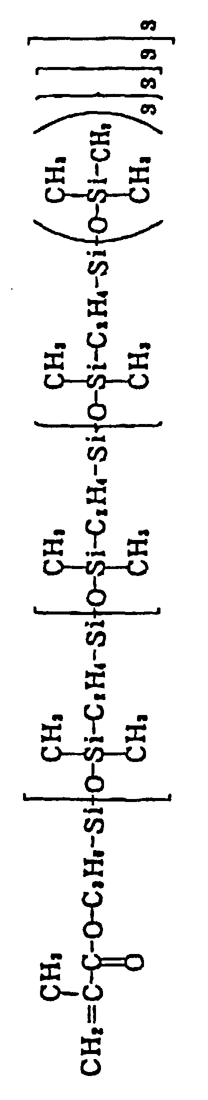

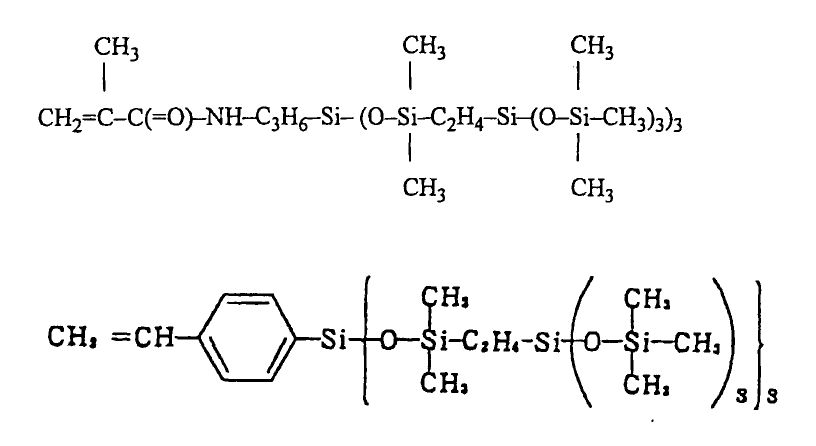

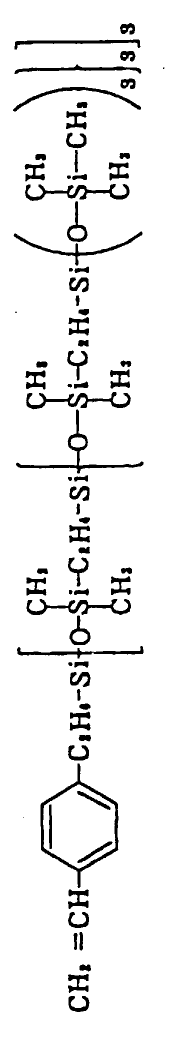

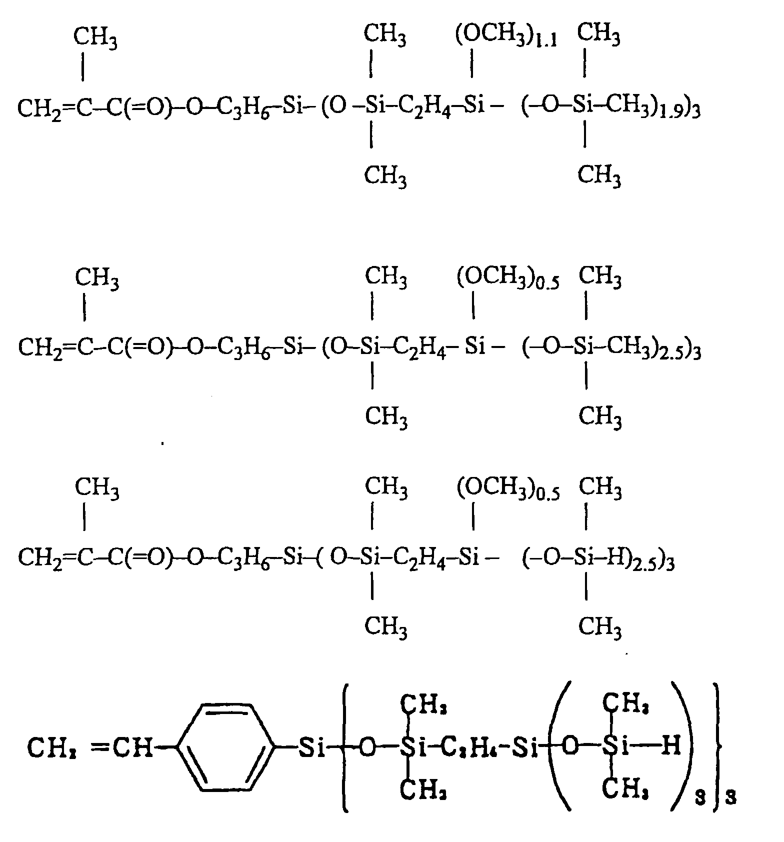

The carbosiloxane dendrimer described above can be synthesized by the method for synthesizing the branched siloxane-silalkylene copolymer described in Japanese Patent Application Number Hei 9-171154 (1997). This synthesis can be carried out, for example, by running a hydrosilylation reaction between an alkenyl-functional organosilicon compound and an SiH-functional silicon compound with the following general formula 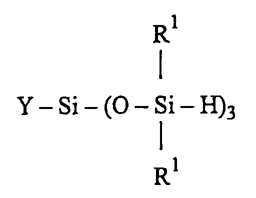 in which R¹ and Y are defined as above. The silicon compound with this formula is exemplified by 3-methacryloxypropyltris(dimethylsiloxy)silane, 3-acryloxypropyltris(dimethylsiloxy)silane, and 4-vinylphenyltris(dimethylsiloxy)silane. The alkenyl-functional organosilicon compound referenced above is exemplified by vinyltris(trimethylsiloxy)silane, vinyltris(dimethylphenylsiloxy)silane, and 5-hexenyltris(trimethylsiloxy)silane. This hydrosilylation reaction is preferably run in the presence of a transition metal catalyst, e.g., chloroplatinic acid or a platinum-vinylsiloxane complex.

The component (A) : component (B) polymerization ratio in the vinyl-type polymer used in this invention should be in the range from 0 : 100 to 99.9 : 0.1 as the component (A) : component (B) weight ratio and is preferably from 1 : 99 to 99 : 1 and more preferably is from 10 : 90 to 80 : 20. A component (A) : component (B) ratio of 0 : 100 indicates that the vinyl-type polymer used in this invention is a homopolymer of component (B).

The vinyl-type polymer used in this invention is afforded by the copolymerization of the components (A) and (B) or by the polymerization of component (B) alone. This polymerization can be effected by a radical polymerization mechanism or an ionic polymerization mechanism using solution polymerization, emulsion polymerization, suspension polymerization, or bulk polymerization techniques. Solution polymerization using a radical polymerization mechanism is optimally used.

This solution polymerization can be run by reacting components (A) and (B) in solvent in the presence of a radical initiator for 3 to 20 hours at a temperature of 50 to 180°C. The solvent used for this solution polymerization is exemplified by aliphatic hydrocarbons such as hexane, octane, decane, and cyclohexane; aromatic hydrocarbons such as benzene, toluene, and xylene; ethers such as diethyl ether, dibutyl ether, tetrahydrofuran, and dioxane; ketones such as acetone, methyl ethyl ketone, methyl isobutyl ketone, and diisobutyl ketone; esters such as methyl acetate, ethyl acetate, butyl acetate, and isobutyl acetate; alcohols such as methanol, ethanol, isopropyl alcohol, and butanol; and organosiloxane oligomers such as octamethylcyclotetrasiloxane, decamethylcyclopentasiloxane, hexamethyldisiloxane, and octamethyltrisiloxane.

Those compounds generally known in the art for use in radical polymerization can be used as the radical initiator. These are exemplified by azobis compounds such as 2,2'-azobis(isobutyronitrile), 2,2'-azobis(2-methylbutyronitrile), and 2,2'-azobis(2,4-dimethylvaleronitrile), and by organoperoxides such as benzoyl peroxide, lauroyl peroxide, tert-butyl peroxybenzoate, and tert-butyl peroxy-2-ethylhexanoate. This radical initiator can be a single compound or a combination of two or more compounds. The radical initiator is preferably used from 0.1 to 5 weight parts for each 100 weight parts of the sum of components (A) and (B).

A chain transfer agent may also be added to the polymerization. This chain transfer agent is exemplified by mercapto compounds such as 2-mercaptoethanol, butyl mercaptan, n-dodecyl mercaptan, 3-mercaptopropyltrimethoxysilane, and mercaptopropyl-functional polydimethylsiloxane, and by halogenated compounds such as methylene chloride, chloroform, carbon tetrachloride, butyl bromide, and 3-chloropropyltrimethoxysilane. Production of the vinyl-type polymer of the invention preferably includes a post-polymerization removal of the residual unreacted vinyl monomer by heating under reduced pressure.

Based on considerations of ease of molding into a film, the number-average molecular weight of the vinyl-type polymer used in this invention should generally be from 3,000 to 2,000,000 and is preferably from 5,000 to 1,000,000 and more preferably is from 10,000 to 100,000. However, the number-average molecular weight of the vinyl-type polymer used by this invention can be below 3,000 when this pendant carbosiloxane dendrimer-functional vinyl-type polymer is blended with another organic resin.

In one embodiment the gas-permeable film of this invention uses the pendant carbosiloxane dendrimer-functional vinyl-type polymer as its base component. In another embodiment this film can comprise a resin composition that is a mixture comprising said vinyl-type polymer and an additional thermoplastic resin. This additional thermoplastic resin can be any moldable thermoplastic resin, and its type and other properties are not otherwise critical.

The subject thermoplastic resin is exemplified by the following: polyolefins comprising the homopolymers and copolymers of alpha-olefins such as ethylene, propylene, 1-butene, 1-pentene, 1-hexene, and 4-methyl-1-pentene, e.g., polyethylene, low-density polyethylene, high-density polyethylene, ultrahigh-molecular-weight polyethylene, polypropylene, and ethylene-propylene copolymers; olefin resins that are the copolymers of the above-listed alpha-olefins with non-alpha-olefin monomers such as vinyl acetate, methyl methacrylate, and maleic acid, e.g., ethylene-vinyl acetate copolymers and ethylene/(meth)acrylate ester copolymers; the homopolymers and copolymers of acrylic monomers such as acrylic acid, methacrylic acid, (meth)acrylate esters (e.g., methyl (meth)acrylate, butyl methacrylate, cyclohexyl (meth)acrylate, 2-ethylhexyl (meth)acrylate, phenyl (meth)acrylate, benzyl (meth)acrylate, 2-hydroxyethyl (meth)acrylate, glycidyl (meth)acrylate, and diethylaminoethyl (meth)acrylate), and multifunctional (meth)acrylates (e.g., ethylene glycol di(meth)acrylate, trimethylolpropane tri(meth)acrylate, and neopentyl glycol di(meth)acrylate); the acrylic resins afforded by copolymerization of an acrylic monomer as listed above with a styrene monomer (e.g., styrene, alpha-methylstyrene), vinyl monomer (e.g., vinyl acetate, vinyl chloride, vinylidene chloride), or maleimide monomer (e.g., phenylmaleimide, cyclohexylmaleimide, maleimide); halogenated vinyl resins such as polyvinyl chloride, polyvinylidene chloride, polyvinyl fluoride, and polyvinylidene fluoride; styrene resins such as polystyrene, high-impact polystyrene, acrylonitrile/butadiene/styrene copolymer (ABS resin), acrylonitrile/styrene copolymer, acrylonitrile/acrylic rubber/styrene copolymer, and acrylonitrile/ethylene-propylene rubber/styrene copolymer; polyesters such as polyethylene terephthalate, polybutylene terephthalate, polyethylene naphthalate, polyethylene terephthalate/isophthalate, and polybutylene terephthalate/isophthalate; polyamides such as nylon 6, nylon 66, nylon 6/66, nylon 6/12, nylon 610, nylon 612, nylon 11, and nylon 12; polyoxyalkylene resins such as polyacetals; polycarbonates; polyvinyl acetates; polysulfones; polyethersulfones; polyarylene sulfides such as polyphenylene sulfide; polyarylates; polyimides; polyamideimides; polyetherimides; polyetheretherketones; liquid-crystal polyesters; fluororesins such as polytetrafluoroethylene and ethylene/tetrafluoroethylene copolymers; thermoplastic elastomers such as styrene elastomers, olefin elastomers, urethane elastomers, fluoroelastomers, vinyl chloride elastomers, polyamide elastomers, and polyester elastomers; and the mixtures and copolymers that can be prepared from two or more selections from the above-listed thermoplastic resins. Preferred among the preceding are polyolefin resins, polyamides, and polyesters.

The resin composition comprising the pendant carbosiloxane dendrimer-functional vinyl-type polymer and additional thermoplastic resin preferably contains from 0.01 to 99.9 weight% of the pendant carbosiloxane dendrimer-functional vinyl-type polymer.

The gas-permeable film of this invention may contain, insofar as the advantageous effects of the invention are not impaired, the various additives known for admixture into films. These additives are exemplified by fillers such as glass fiber, carbon fiber, thermoplastic resin fiber, graphite, mica, talc, and silica micropowder, by molding aids such as lubricants; by stabilizers such as lightproofing agents, oxidation inhibitors, and UV stabilizers; and by flame retardants, antistatics, colorants such as pigments, surfactants, and antimicrobials.

The gas-permeable film can be produced by molding a film from the subject pendant carbosiloxane dendrimer-functional vinyl-type polymer ― or from its resin composition with the additional thermoplastic resin ― using the usual molding techniques known for molding films.

These molding techniques are exemplified by compression molding, extrusion molding techniques such as inflation molding and T-die molding, and by casting. The films encompassed by the present invention include sheet moldings in addition to film moldings. The thickness of the films encompassed by this invention will generally be from 1 micrometers to 3 mm and is preferably from 1 micrometer to 200 micrometers.

The gas-permeable film can be integrated into a single body with a film substrate, for example, nonwoven textiles composed of a thermoplastic resin as described above, piece fabrics, perforated films and sheet moldings, metal meshes, porous ceramic sheets, and paper. These film substrates can be made into gas-permeable films and gas-permeable sheets by such methods as lamination, impregnation, and integration into a single element by painting.

The gas-permeable film has an excellent gas permeability as represented by its oxygen permeability and is also water repellent, moldable, heat resistant, and durable. It will, therefore, be useful in those applications where such characteristics are critical, for example, as a film for medical and hygiene applications, e.g., as a base film for feminine hygiene products and diapers, compresses, and adhesive plasters and adhesive bandages; and as a packaging material for oxygen absorbents, odor absorbents, perfumes and fragrances, reagents, and oxygen-reacting warming agents. The following examples are given only for illustrative purposes without limiting the scope

### EXAMPLES

The releasability of the moldings, appearance of the moldings, water repellency, and oxygen permeability were measured by the following procedures.

### Releasability of the moldings

The resin was filled into a stainless steel mold designed to produce 1 sheet molding with dimensions of 100 mm × 100 mm × 3 mm and was compression molded at 220°C for 10 minutes. After the mold cooled, the sheet molding was manually demolded and the releasability of the sheet molding from the mold during this operation was evaluated on a relative basis by feel.

### Appearance of the moldings

The appearance of the sheet molding was visually evaluated.

### Water repellency

The contact angle versus water was measured on the sheet molding using an automatic contact angle instrument from Kyowa Kaimen Kagaku Co., Ltd.

### Oxygen permeability

The oxygen permeability was measured at 23°C, 0% humidity, and a 5% oxygen concentration using the oxygen permeability test described in JIS K-7126. The measurement instrumentation was an oxygen permeation tester (Model 10/50 from Modern Controls, Inc.). The test sample had a membrane area of 50 cm². The measured value P is the oxygen permeation coefficient times 10¹⁰. The unit is cm³·cm/(cm²·sec·mmHg).

### Reference Example 1

24.0 g methyl methacrylate, 6.0 g of the methacryl-functional carbosiloxane dendrimer with the following structure 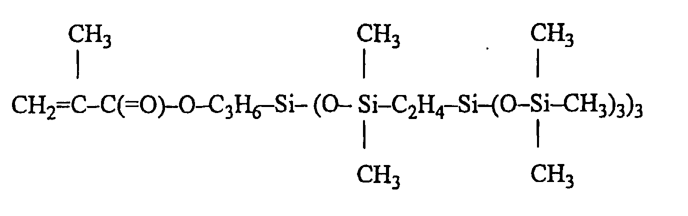 and 90 g toluene were introduced into a 200-mL four-neck flask equipped with a stirrer, thermometer, and reflux condenser and were heated to 70°C under a nitrogen atmosphere while stirring. 0.3 g α,α'-azobisisobutyronitrile was then added and the reaction was stirrer for 6 hours.

Part of the toluene was thereafter removed by heating and stirring under an aspirator vacuum. The remaining reaction solution was introduced into a large excess of methanol. After stirring, the mass was brought to quiescence and the precipitate was isolated. Drying this in vacuo gave 26.2 g pendant carbosiloxane dendrimer-functional vinyl-type polymer in the form of a transparent and colorless solid.

### Example 1

100 g of the vinyl-type polymer synthesized in Reference Example 1 and 25 g polymethyl methacrylate (Acrypet MF from Mitsubishi Rayon) were introduced into a Labo-Plast Mill and were mixed for 10 minutes at 100 rpm and 220°C to produce a resin composition. This resin composition was filled into the stainless steel mold and compression molded at 220°C for 10 minutes to produce a sheet molding with dimensions of 100 mm × 100 mm × 3 mm.

The mold releasability, appearance, water repellency, and oxygen permeability were measured on the resulting sheet molding, and the results are in Table 1.

### Comparative Example 1

75 g of the polymethyl methacrylate as used in Example 1 and 37.5 g linear polydimethylsiloxane (viscosity at 25°C=10⁶ mPa·s) were introduced into a Labo-Plast Mill and were mixed for 10 minutes at 100 rpm and 220°C to produce a resin composition. This resin composition was evaluated as in Example 1, and the results are in Table 1.

### Comparative Example 2

75 g of the polymethyl methacrylate as used in Example 1 and 37.5 g polymethyl methacrylate/polydimethylsiloxane graft copolymer were introduced into a Labo-Plast Mill and were mixed for 10 minutes at 100 rpm and 220°C to produce a resin composition.

This resin composition was evaluated as in Example 1, and the results are in Table 1.

**Table 1**

| | releasability | appearance of the molding | water repellency (°) | oxygen permeation coefficient |
|---|---|---|---|---|
| Example 1 | excellent | excellent | 103 | 3.6 |
| Comp. Ex. 1 | excellent | oil bleed out | 110 | 0.9 |
| Comp. Ex. 2 | poor | excellent | 100 | - |

### Example 2

60 weight parts of the pendant carbosiloxane dendrimer-functional vinyl-type polymer synthesized in Reference Example 1 and 40 weight parts nylon 66 resin were melt-blended to give a resin composition. This resin composition was convened into film by inflation to give a vinyl-type resin composition film with a thickness of 35 micrometers.

### Example 3

The 35 micrometer-thick vinyl-type resin composition film fabricated in Example 2 was laminated on the printed surface of a polypropylene nonwoven fabric on which text had been printed. The back, print-free side was then laminated with a perforated polyethylene sheet to give a packaging material with a three-layer structure. This packaging material was folded in half with the printed side on the outside, and an iron-based oxygen scavenger (Hokaron from Lotte Co., Ltd.) was introduced into the interior to serve as the contents. Execution of a seal on the three sides then gave a packet of an iron-based oxygen scavenger.

This iron-based oxygen scavenger packet was then wrapped in a 500-mL volume with a nylon bag, and the oxygen concentration in the overwrapping bag was measured at 25°C and 100% humidity. Absolutely no exudation or outmigration of the packaged iron-based oxygen scavenger was observed. The measurement results are in Table 2.

**Table 2**

| elapsed time: | after 24 hours | after 48 hours | after 72 hours |
|---|---|---|---|
| oxygen concentration in % | 2.5 | 0.2 | 0.1 |

### Comparative Example 3

A packet was prepared as in Example 3, but in this case using a nylon resin film in place of the film used in Example 3 that had been fabricated from the resin composition containing a pendant carbosiloxane dendrimer-functional vinyl-type polymer. The oxygen concentration in the overwrapping bag was similarly measured, and these results are in Table 3.

**Table 3**

| elapsed time: | after 24 hours | after 48 hours | after 72 hours |
|---|---|---|---|
| oxygen concentration in % | 19 | 18 | 17 |

## Claims

1. A gas-permeable film comprising:
A) a thermoplastic resin, and
B) a pendant carbosiloxane dendrimer-functional vinyl-type polymer, wherein the pendant carbosiloxane dendrimer-functional vinyl-type polymer comprises a group having the formula 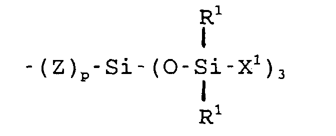 wherein Z is a divalent organic group, p is 0 or 1, R¹ is C₁ to C₁₀ alkyl or aryl, and X¹ is a silylalkyl group with the formula at i = 1 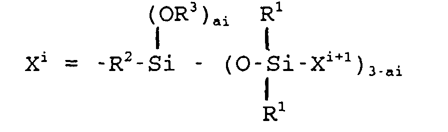 wherein R¹ is defined as above; R² is C₂ to C₁₀ alkylene; R³ is C₁ to C₁₀ alkyl; Xⁱ⁺¹ is selected from the group consisting of a hydrogen atom, C₁ to C₁₀ alkyl, aryl, and the silylalkyl group; i is an integer with a value from 1 to 10, and a¹ is an integer from 0 to 3.

2. The gas-permeable film of claim 1, wherein the pendant carboxiloxane dendrimer-functional vinyl-type polymer is prepared by polymerizing a composition comprising: (b) a carbosiloxane dendrimer that comprises a radically polymerizable organic group, said carbosiloxane dendrimer having the general formula 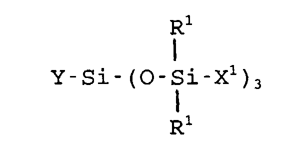 wherein Y is a radically polymerizable organic group, and R¹, X¹, i, and aⁱ are as described above.

3. The gas-permeable film of claim 2, wherein Y is a group selected from the group consisting of:
i) acryl- and methacryl-functional organic groups with the general formulas 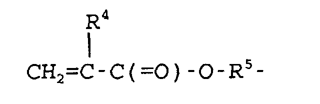 and 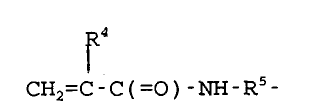 wherein R⁴ is selected from the group consisting of a hydrogen atom and a methyl group, and R⁵ is C₁ to C₁₀ alkylene;
ii) a styryl-functional organic group with the general formula 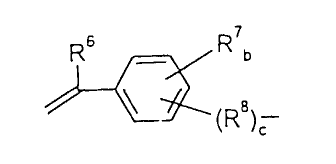 wherein R⁶ is selected from the group consisting of a hydrogen atom and a methyl group, R⁷ is C₁ to C₁₀ alkyl, R⁸ is C₁ to C₁₀ alkylene, b is an integer from 0 to 4, and c is 0 or 1; and
iii) C₂ to C₁₀ alkenyl.

4. The gas-permeable film of claims 2-3, wherein the composition further comprises
a) a vinyl monomer comprising a radically polymerizable vinyl group.

5. The gas-permeable film of claim 4, wherein the vinyl monomer is selected from the group consisting of lower alkyl(meth)acrylates, higher alkyl(meth)acrylates; vinyl esters of lower aliphatic acids; vinyl esters of higher aliphatic acids; aromatic vinyl monomers; amide-functional vinyl monomers; hydroxyl-functional vinyl monomers; fluorinated vinyl monomers; epoxy-functional vinyl monomers; carboxyl-functional vinyl monomers; ether linkage-containing vinyl monomers; unsaturated group-functionalized silicone compounds; butadiene; vinyl-chloride; vinylidene chlo-ride; (meth)acrylonitrile; dibutyl fumarate; maleic anhydride; dodecylsuccinic anhydride; (meth)acryl glycidyl ether; alkali metal salts, ammonium salts, and organic amine salts of radically polymerizable unsaturated carboxylic acids; radically polymerizable unsaturated monomers that contain a sulfonic acid residue and their alkali metal salts, ammonium salts, and organic amine salts; quaternary ammonium salts that are derived from (meth)acrylic acid; methacrylate esters of alcohols that contain a tertiary amine group and quaternary ammonium salts thereof; multifunctional vinyl monomers; unsaturated group-functional silicone compounds; and a silicone compound comprising both a radically polymerizable unsaturated group and a hydrolyzable group.

6. The gas-permeable film of claims 4-5, wherein components a) and b) are present in amounts such that a weight ratio of component a):component b) is 10:90 to 80:20.

7. The gas-permeable film of claims 1-6, wherein A) the thermoplastic resin is selected from the group consisting of polyolefins comprising homopolymers and copolymers of alpha-olefins; olefin resins that are copolymers of alpha-olefins with non-alpha-olefin monomers; homopolymers and copolymers of acrylic monomers; acrylic resins afforded by copolymerization of an acrylic monomer with a monomer selected from the group consisting of styrene monomers, vinyl monomers, and maleimide monomers; halogenated vinyl resins; styrene resins; polyamides; polyoxyalkylene resins; polycarbonates; polyvinyl acetates; polysulfones; polyethersulfones; polyarylene sulfides; polyarylates; polyimides; polyamideimides; polyetherimides; polyether-etherketones; liquid-crystal polyesters; fluororesins; thermoplastic elastomers; and mixtures and copolymers that can be prepared from two or more of said thermoplastic resins.

8. The gas-permeable film of claims 1-7, wherein component A) is present at 0.01 to 99.9 weight % of the gas-permeable film.

9. The gas-permeable film of claims 1-8, further comprising an additive selected from the group consisting of fillers, molding aids, stabilizers, flame retardants, antistatics, colorants, surfactants, and antimicrobials.

10. The gas-permeable film of claims 1-9, wherein the gas-permeable film has a thickness of 1 micrometer to 3 millimeters.

11. A method for preparing a gas-permeable film of claims 1-10, wherein the method comprises:
1) molding a film from a mixture comprising
A) a thermoplastic resin, and
B) a pendant carbosiloxane dendrimer-functional vinyl-type polymer B) a pendant carbosiloxane dendrimer-functional vinyl-type polymer, wherein the pendant carbosiloxane dendrimer-functional vinyl-type polymer comprises a group having the formula 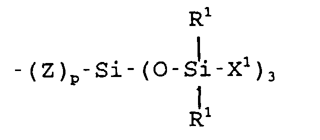 wherein Z is a divalent organic group, p is 0 or 1, R¹ is C₁ to C₁₀ alkyl or aryl, and X¹ is a silylalkyl group with the formula at i = 1 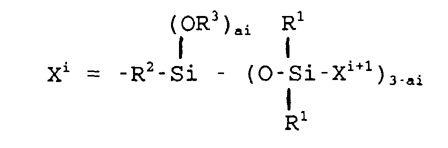 wherein R¹ is defined as above; R² is C₂ to C₁₀ alkylene; R³ is C₁ to C₁₀ alkyl; Xⁱ⁺¹ is selected from the group consisting of a hydrogen atom, C₁ to C₁₀ alkyl, aryl, and the silylalkyl group; i is an integer with a value from 1 to 10; and aⁱ is an integer from 0 to 3; and
2) demolding the product of step 1).

12. The method of claim 11, wherein molding is carried out by a technique selected from the group consisting of compression molding, extrusion molding, and casting.

13. The method of claim 12, wherein compressione molding is carried out by
i) filling a mold with the mixture
ii) heating the product of step i), and thereafter
iii) cooling the product of step ii).

14. The method of claims 11-13, wherein the method further comprises integrating the gas-permeable film into a single body with a film substrate, wherein integrating is carried out by a method selected from the group consisting of lamination, impregnation, and integration into a single element by painting.

15. The method of claim 14, wherein the substrate is selected from the group consisting of nonwoven textiles comprising a thermoplastic resin, piece fabrics, perforated films, sheet moldings, metal meshes, porous ceramic sheets, and paper.
